**Europäisches Patentamt**

**European Patent Office**

**Office européen des brevets**

(19)

(11) Veröffentlichungsnummer : **0 358 030 B1**

(12)

# EUROPÄISCHE PATENTSCHRIFT

(45) Veröffentlichungstag der Patentschrift :
**25.03.92 Patentblatt 92/13**

(51) Int. Cl.⁵ : **B65H 67/06, B65G 59/10**

(21) Anmeldenummer : **89115403.1**

(22) Anmeldetag : **21.08.89**

(54) **Vorrichtung zum Vereinzeln von zu Säulen ineinandergesteckten konischen Hülsen.**

(30) Priorität : **03.09.88 DE 3829990**

(43) Veröffentlichungstag der Anmeldung :
**14.03.90 Patentblatt 90/11**

(45) Bekanntmachung des Hinweises auf die
Patenterteilung :
**25.03.92 Patentblatt 92/13**

(84) Benannte Vertragsstaaten :
**CH DE FR IT LI**

(56) Entgegenhaltungen :
**DE-A- 2 131 957**
**FR-A- 2 527 192**
**PATENT ABSTRACTS OF JAPAN vol. 5, no.
123 (M-82)(795) 8 August 1981, & JP-A-56
061275 (MURATA KIKAI K.K.) 26 Mai 1981,**

(73) Patentinhaber : **W. SCHLAFHORST AG & CO.**
**Blumenberger Strasse 143-145**
**W-4050 Mönchengladbach 1 (DE)**

(72) Erfinder : **Koltze, Bodo**
**Breite Strasse 100**
**W-4050 Mönchengladbach 2 (DE)**

## Beschreibung

Die Erfindung betrifft eine Vorrichtung zum Vereinzeln von zu Säulen ineinandergesteckten konischen Hülsen mit Greifvorrichtungen für die jeweils letzte und vorletzte Hülse am Fuß der Säule, wobei die Greifvorrichtungen zum Lösen der Hülsen gegeneinander verdrehbar und zur Beabstandung der Hülsen voneinander axial zueinander verschieblich angeordnet sind.

Durch Ineinanderschieben können konische Hülsen platzsparend magaziniert und den Textilmaschinen zugeführt werden. An den Textilmaschinen müssen diese zu Säulen ineinandergesteckten Hülsen vereinzelt werden, das heißt, die erste oder letzte Hülse einer solchen Säule muß von der nachfolgenden beziehungsweise vorhergehenden Säule abgezogen werden. Die zu vereinzelnde Hülse kann, bedingt durch ihre geringe Konizität und die Oberflächenbeschaffenheit ihrer Innen- und Außenwand, so stark in der Säule der Hülsen verkeilt sein, daß sie nur noch sehr schwer vereinzelt werden kann. Andererseits kann eine andere Hülse aber auch relativ lose in der Hülsensäule liegen, so daß sie sehr leicht abgezogen werden kann. Die für die Vereinzelung einer Hülse aus einer Hülsensäule erforderliche Kraft kann innerhalb eines sehr großen Bereiches schwanken und ist zudem nicht vorhersehbar.

Die für einen Vereinzelungsvorgang erforderliche Kraft muß aber auch auf den Werkstoff der Hülse und auf deren Aufbau Rücksicht nehmen. Bei geringer Wanddicke, vor allem bei Kunststoff-Einweghülsen, besteht die Gefahr, daß sich die Hülsen sehr leicht verformen. Besonders bei Papphülsen besteht die Gefahr, daß die Oberfläche durch einen zu kraftvoll durchgeführten Vereinzelungsvorgang beschädigt wird.

Es sind bereits Vorrichtungen zum mechanischen Vereinzeln von zu Säulen ineinandergesteckten konischen Hülsen bekannt. In der DE-OS 21 31 957 wird eine solche Vorrichtung beschrieben, in der in einer überlagerten Dreh- und Axialbewegung die Hülsen durch Greifer vereinzelt werden. Die für die Vereinzelung notwendige Klemmbewegung der verwendeten Greifer wird dadurch erreicht, daß sie mit einer Kurvenkontur in formschlüssiger Verbindung stehen.

Diese Vorrichtung arbeitet mit einer einmal vorgegebenen Kraft zur Vereinzelung der Hülsen. Es besteht also die Gefahr, daß Hülsen zu hart ergriffen und dadurch beschädigt werden oder aufgrund zu geringer Kraft nicht aus der Hülsensäule herausgezogen werden können.

Aufgabe der Erfindung ist es, eine Vorrichtung vorzuschlagen, bei der sich die für die Vereinzelung der Hülsen erforderliche Klemmkraft selbsttätig der Haftung zwischen den Hülsen anpaßt, das heißt, nur die gerade erforderliche Klemmkraft wird auf die Hülse ausgeübt.

Die Lösung der Aufgabe erfolgt erfindungsgemäß mit Hilfe der kennzeichnenden Merkmale des Anspruchs 1.

Der Vorteil der erfindungsgemäßen Vorrichtung liegt darin, daß die ineinandergesteckten zu lösenden Hülsen in radialer Richtung nur mit einer Kraft beaufschlagt werden, die zum Lösen der Hülsen voneinander unbedingt erforderlich ist. Damit werden sehr festsitzende Hülsen und auch lose sitzende Hülsen sicher und schonend vereinzelt und eine Beschädigung der Hülsen vermieden. Die erfindungsgemäße Vorrichtung arbeitet nach dem Prinzip eines Klemmgesperres. Ein Klemmgesperre wirkt so, daß es die Bewegung des zu klemmenden Körpers in einer Richtung zuläßt, in der Gegenrichtung dagegen festzieht, wobei die Kraftwirkung des Gesperres auf den zu klemmenden Körper um so größer ist, je stärker der Körper in die Richtung gezogen wird, in der von dem Gesperre die Klemmung erzeugt wird. Derartige Klemmgesperre haben für eine Hülsenvereinzelungsvorrichtung den besonderen Vorteil, daß sie die obengenannten Vorteile auch dann nicht verlieren, wenn sie im Durchmesser unterschiedliche Hülsen ergreifen. Die erfindungsgemäße Vorrichtung ist damit, ohne daß sie umgestellt werden muß, für Hülsensäulen mit Hülsen unterschiedlicher Durchmesser einsetzbar.

Bei der erfindungsgemäßen Vorrichtung sind jeweils für die letzte und für die vorletzte Hülse Greifer vorhanden. Diese Greifer sind derart an je einem die jeweilige Hülse umfassenden Greifring beweglich angeordnet, daß bei entgegengesetzter Drehung der beiden Greifringe um die Hülsenlängsachse mit zunehmender Relativbewegung der Greifringe gegeneinander die Greifer mit steigender Kraft gegen die Hülsen gedrückt werden. Die Sperrwirkung des ersten Greifringes ist entgegengesetzt der des zweiten Greifringes. Der radialen Bewegung des Greifrings für die letzte Hülse wird eine axiale Bewegung in Richtung der Hülsenlängsachse überlagert, um die vereinzelte Hülse aus der Säule zu ziehen. Zum Zeitpunkt der Überwindung der Haftung zwischen den Hülsen sinkt die von den Gesperren aufgebrachte Kraft auf die Vorspannkraft ab. Zur Vereinzelung der Hülsen wird damit nur eine so große Kraft aufgebracht, wie sie zur Überwindung der Haftung erforderlich ist. Da für den Vereinzelungsvorgang die letzte und die vorletzte Hülse geklemmt werden müssen, wird auf beide Hülsen eine gleich große Kraft ausgeübt.

Zum gemeinsamen Betätigen der Greifer eines Greifringes sind Steuerelemente vorgesehen, die drehbar auf dem Tragkörper der Greifringe angeordnet sind. Durch die Betätigung der Steuerlemente können die Greifer zur Anlage an die dem jeweiligen Greifring zugeordnete Hülse gebracht werden oder in eine Position, in der die Hülsen freigegeben werden und das Vorschieben der Hülsen, das Vorschieben der Hülsensäule für einen erneuten Vereinzelungsvorgang, möglich ist.

Für einen automatischen Betrieb der erfindungsgemäßen Vorrichtung, daß heißt eine automatische Beschickung mit Spulenhülsen und deren Entnahme, kann die erfindungsgemäße Vorrichtung an eine mit der zu beschickenden Textilmaschine gekoppelte Steuereinheit angeschlossen werden. Das Öffnen und Schließen der Klemmgesperre zur Aufnahme und zur Vereinzelung der Hülsen erfolgt über die Steuerelemente.

Damit die Gesperre in der gewünschten Weise wirksam werden können, sind die Greifer an den Greifringen für die letzte Hülse und die Greifer an den Greifringen für die vorletzte Hülse mittels der ihnen zugeordneten Steuerelemente schwenkbar zueinander angebracht. Zur Einnahme einer geöffneten oder geschlossenen Stellung werden die Steuerelemente an den beiden Greifringen gegensinnig betätigt. Wird der Greifring der vorletzten Hülse festgehalten und der Greifring der letzten Hülse gedreht, werden die Gesperre der beiden Greifringe automatisch wirksam und die ergriffenen Hülsen verdrehen sich gegeneinander.

In Weiterbildung der Erfindung sind Anschläge zur Betätigung der Steuerelemente vorhanden. Sie begrenzen den Drehweg der Steuerlemente. Da Tragkörper und Steuerelemente gegeneinander verdrehbar sind, dreht sich der Tragkörper weiter, während ein Steuerelement gegen einen Anschlag stößt. Während sich der Tragkörper über die Anschlagposition weiterbewegt, betätigen die mit den Greifern in Wirkverbindung stehenden Steuerlemente die auf dem Tragkörper gelagerten Greifer. Bei der Drehung des Greifringes für die letzte Hülse in eine festgelegte Position bewegen die Steuerelemente die Greifer so, daß sie sich öffnen und die letzte Hülse entnommen werden kann. Steht das Steuerelement des Greifringes für die vorletzte Hülse in einer entgegengesetzten Position, sind dessen Greifer ebenfalls geöffnet. Da der Greifring für die vorletzte Hülse nur eine Haltefunktion ausübt, benötigt er nur ein Steuerlement und braucht nicht gedreht zu werden. Das Steuerelement kann über einen Betätigungshebel direkt betätigt werden. Stehen die Greifer beider Greifringe offen, kann die Hülsensäule zur erneuten Vereinzelung bis zum Anschlag vorgeschoben werden.

Damit aus der geöffneten Stellung der Greifer heraus zwei weitere Hülsen ergriffen werden können, muß der Greifring für die letzte Hülse in eine entgegengesetzte Richtung zum zuvor geschilderten Öffnen gedreht werden. Es sind weitere Anschläge zur Betätigung der Steuerelemente vorhanden. In einer zweiten Position treten die Steuerelemente ebenfalls mit den Greifern in Wirkverbindung und bewirken, daß in dieser Position die Greifer in eine geschlossene Stellung zum Festhalten der letzten Hülse schwenken. Diese zweite Position kann in vorteilhafter Weise so gewählt werden, daß beim Positionieren der Greifer die Hülsen immer wieder an der gleichen Stelle erfaßt werden. Wird das Steuerelement des Greifringes für die vorletzte Hülse in einer zu den Greifringen der letzten Hülse entgegengesetzten Richtung betätigt, beispielsweise über einen Betätigungshebel, wird die vorletzte Hülse ebenfalls ergriffen. Das Ergreifen der Hülsen, das Vereinzeln und das nachfolgende Freigeben können auf den Beschickungsvorgang einer Textilmaschine abgestimmt selbsttätig geregelt werden.

In Weiterbildung der Erfindung ist der Greifring der vorletzten Hülse gegenüber dem Greifring der letzten Hülse zur Einstellung des Abstandes der Greifringe zueinander verschiebbar und feststellbar angeordnet, um bei unterschiedlicher Konizität oder Wanddicke der Hülsen die Position der Greifringe zu den Hülsen optimal einstellen zu können. Damit wird vorteilhaft die Möglichkeit geboten, sowohl schwach konische Hülsen als auch stark konische Hülsen sowie Hülsen unterschiedlicher Wanddicke mit der gleichen Vorrichtung zu vereinzeln, ohne daß aufwendige Umstellarbeiten an den Greifeinrichtungen vorgenommen werden müssen. Für schwach konische Hülsen ist der Abstand der beiden Greifringe größer als bei stark konischen Hülsen. Ein weiterer Vorteil der erfindungsgemäßen Vorrichtung besteht darin, daß sich aufgrund der Bauart der Klemmgesperre die Greifer in einem weiten Bereich von selbst dem Außendurchmesser der Hülsen anpassen. Dadurch ist der Hülsendurchmesser in großen Grenzen variierbar ohne daß an den Greifringen oder an den Greifern eine Änderung der Einstellung vorgenommen werden muß.

Anhand eines Ausführungsbeispiels wird die erfindungsgemäße Vorrichtung näher erläutert.

Fig. 1 zeigt eine Übersicht über die Anordnung der erfindungsgemäßen Vorrichtung zwischen einem Hülsenmagazin und einer Hülsenförderanlage.

Fig. 2a zeigt als Einzelheit einen Greifring zum Ergreifen der letzten Hülse am unteren Ende der Hülsensäule von der Seite, auf der die Gesperre angeordnet sind.

Fig. 2b zeigt die Rückseite des Greifringes.

Fig. 3 zeigt eine Anordnung der Greifringe in der erfindungsgemäßen Vorrichtung.

Fig. 4 zeigt eines der Gesperre in verschiedenen Positionen:

    Fig. 4a in der Greifposition,

    Fig. 4b in einer geöffneten Stellung und

    Fig. 4c in der Stellung, wenn sich keine Hülse in der Vorichtung befindet.

Fig. 5a zeigt die Position eines Greifringes bei geschlossenen Gesperren.

Fig. 5b zeigt die Position eines Greifringes bei geöffneten Gesperren.

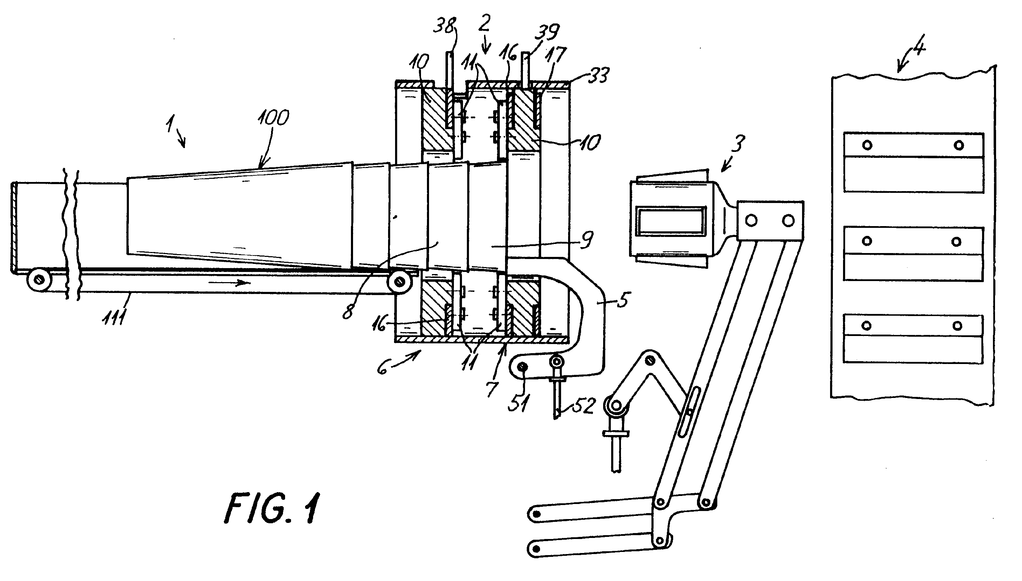

Fig. 1 zeigt eine Übersicht über die Anordnung der erfindungsgemäßen Vorrichtung zwischen einem Hülsenmagazin 1 in dem eine Säule 100 von ineinandergesteckten konischen Hülsen liegt und einer Hülsentransportvorrichtung 4. Die Vorrichtung zur Vereinzelung der ineinandergesteckten konischen Hülsen 2 ist über einen Hülsenzubringer 111 mit dem Magazin 1 verbunden. Die vereinzelten Hülsen werden von einer hier nicht näher dargestellten und beschriebenen Übergabevorrichtung 3 erfaßt und auf eine Transportvorrichtung 4, beispielsweise ein mit Taschen besetztes Förderband, abgelegt. Die Übergabevorrichtung 3 sowie die Transportvorrichtung 4 sind nicht Gegenstand der Erfindung und werden aus diesem Grunde hier nicht näher erläutert.

Die Säule der zu vereinzelnden, ineinandergesteckten konischen Hülsen 100 liegt waagerecht in dem Magazin 1 und wird über dem Hülsenzubringer 111, beispielsweise einem Förderband, der erfindungsgemäßen Vorrichtung 2 zugeführt. Eine senkrechte Anordnung der Vereinzelungsvorrichtung mit senkrechter Hülsenzuführung ist ebenfalls denkbar.

Nachdem die Säule der Hülsen 100 mit dem Hülsenende mit dem größten Durchmesser, dem Fußende, zuerst bis zu einem Anschlag 5 in die Vereinzelungsvorrichtung hineingeschoben wurde, wird die vorletzte Hülse 8 am unteren Ende der Säule von den Greifern 11 des Greifrings 6 erfaßt und zentriert. Ein mit Abstand zum ersten Greifring 6 angeordneter Greifring 7 ist über dem Fußende der letzten Hülse 9 zentriert und seine Greifer 11 erfassen das Fußende der letzten Hülse 9. Der Anschlag 5 wird um seinen Drehpunkt 51 von einer Vorrichtung 52, die hier nicht näher dargestellt ist, aus der Vereinzelungsvorrichtung 2 herausgeschwenkt. Wenn die letzte 9 und die vorletzte Hülse 8 ergriffen sind, wird die letzte Hülse 9 mit einer in Axialrichtung schraubenden Bewegung von der vorletzten Hülse 8 getrennt.

Schließlich wird die nun vereinzelte letzte Hülse 9 von der Übergabevorrichtung 3 aus der Vereinzelungsvorrichtung 2 herausgenommen und auf die Transportvorrichtung 4 abgelegt.

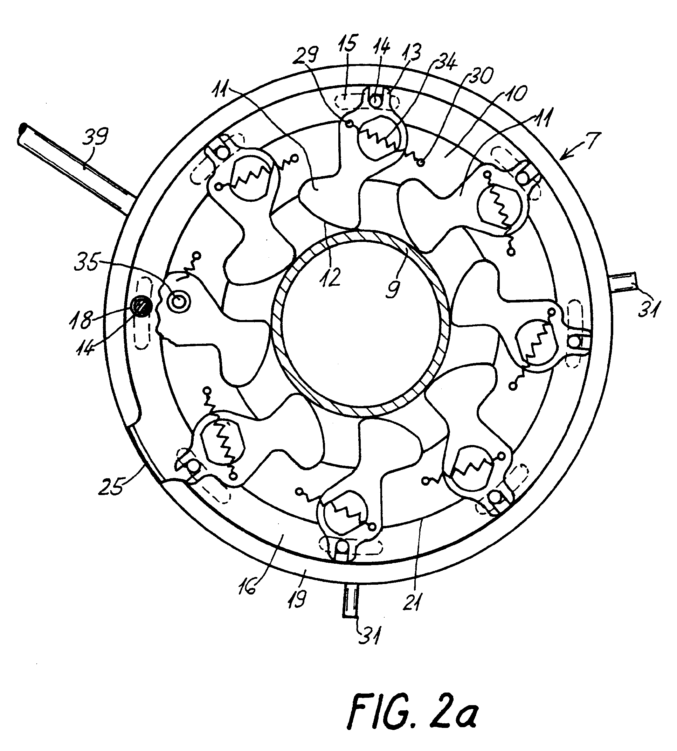

Die Fig. 2a und 2b zeigen den Aufbau eines Greifrings. Beschrieben wird der Greifring 7 für die letzte Hülse 9. Der Aufbau des Greifrings 6 für die vorletzte Hülse 8 ist dem Aufbau des Greifrings 7 vergleichbar.

Fig. 2a zeigt den Greifring 7 von der Seite, an der die Greifer 11 angebracht sind, Fig. 2b zeigt die Rückseite des Greifrings 7.

Am Umfang des ringförmigen Tragkörpers 10 sind acht Greifer 11, die als Gesperre ausgebildet sind, angeordnet. Jedes der Gesperre 11 ist mit einem Gesperrebolzen 35 an dem Tragkörper 10 befestigt und um diesen Drehpunkt schwenkbar gelagert. Die Drehachse 35 eines Gesperres 11 liegt parallel zur Längsachse der Hülse 9. Der vordere Teil der Gesperre 11, der zur Klemmung der Hülse dient, weist einen solchen Verlauf der Klemmkante 12 auf, daß die Gesperre sich bei einer Drehung des zu klemmenden Gegenstandes ebenfalls in dessen Drehrichtung um ihren Drehpunkt herum mitbewegen.

Der Verlauf der Klemmkurve 12 ist so gewählt, daß die Sperrwirkung auch dann eintritt, wenn der Abstand der Oberfläche des zu klemmenden Objektes zum Drehpunkt 35 eines Gesperres 11 variiert wird. Voraussetzung für die einwandfreie Funktion eines Gesperres ist, daß das Gesperre mit einer geringen Kraft gegen die Oberfläche des zu sperrenden Objektes gedrückt wird.

Aufgrund seiner Geometrie und der Reibung zwischen seiner Oberfläche und der des zu sperrenden Objektes muß sich das Gesperre in Sperrichtung verschwenken, das heißt in der Richtung, in der das zu sperrende Objekt bewegt wird. Da sich aber der Abstand der Klemmkurve 12 vom Drehpunkt ständig vergrößert, erhöht sich auch die Kraft, mit der das Gesperre gegen das zu klemmende Objekt gedrückt wird. Die Klemmkurve 12 eines Gesperres 11 berührt das zu klemmende Objekt, in diesem Fall die Spule 9, in einem Punkt. Werden mehrere Gesperre ringförmig um einen zylindrischen Körper angeordnet und so miteinander verbunden, daß sie zwangsweise synchron schwenken, wird dieser Körper gleichmäßig von den Gesperren gegriffen und kann gegen eine Drehbewegung in Schwenkrichtung der Gesperre oder Greifer gesperrt werden.

Das Gesperre 11 kann im Bereich seiner Klemmkurve 12 bearbeitet sein, beispielsweise mit einer quer zur Klemmkurve verlaufenden balligen Kante. Die Balligkeit gibt die Möglichkeit, bei unterschiedlicher Konizität der Hülsen diese trotzdem noch sicher und ohne Kantenpressung zu greifen. Durch Aufrauhen der Oberfläche im Bereich der Klemmkurve 12 kann eine optimale Klemmung des zu klemmenden Objektes erreicht werden.

Jedes Gesperre 11 weist eine Gabel 13 auf, die einen Stift 14 umschließt. Der Stift 14 reicht durch ein in den ringförmigen Tragkörper 10 gefrästes Langloch 15 zur Rückseite des Tragkörpers hindurch. An der Vorder- und Rückseite des Tragkörpers 10 befinden sich jeweils ringförmige Steuerelemente 16 beziehungsweise 17, die an der Stirnfläche 19 beziehungsweise 20 des Tragkörpers 10 anliegen und mit Hilfe einer konzentrischen Führungsfläche 21 beziehungsweise 22 an der Stirnfläche 19 beziehungsweise 20 geführt werden. Die Stifte 14 sind an dem rückwärtigen Steuerelement 17 befestigt und das vordere Steuerelement 16 weist acht Bohrungen 18 auf, in denen die acht Stifte 14 aufgenommen werden. Durch die Stifte 14 werden die beiden Steuerelemente 16 und 17 formschlüssig miteinander verbunden. Mit Hilfe dieser Verbindung wird erreicht, daß sich das vordere Steuerelement 16 immer synchron mit dem hinteren Steuerelement 17 dreht, ohne Rücksicht darauf, ob das für den Drehvorgang benötigte Moment an dem vorderen oder an dem hinteren Steuerelement angreift. Jeder Stift 14 ragt so weit über das vordere Steuerelement 16 hinaus, daß er in Verbindung mit der Gabel 13 des ihm zugeordneten Gesperres 11 in der Lage ist, die Gesperre auf- und zuzuschwenken. Die Lage und Länge des Langlochs 15 in dem Tragkörper 10 bestimmt dabei den Schwenkbereich und den maximalen Schwenkwinkel der Gesperre 11. Durch die Steuerelemente wird eine formschlüssige Verbindung der acht Gesperre 11 untereinander erreicht und eine synchrone Bewegung aller Gesperre sichergestellt. Zur Betätigung der Steuerelemente weisen diese am Greifring 7, dem Greifring für die letzte Hülse 9, auf ihrem Umfang Laschen auf, welche bei der Drehung des Greifringes gegen die sie betätigenden Anschläge stoßen. Steuerelement 16 trägt eine Lasche 25 und Steuerelement 17 eine Lasche 26.

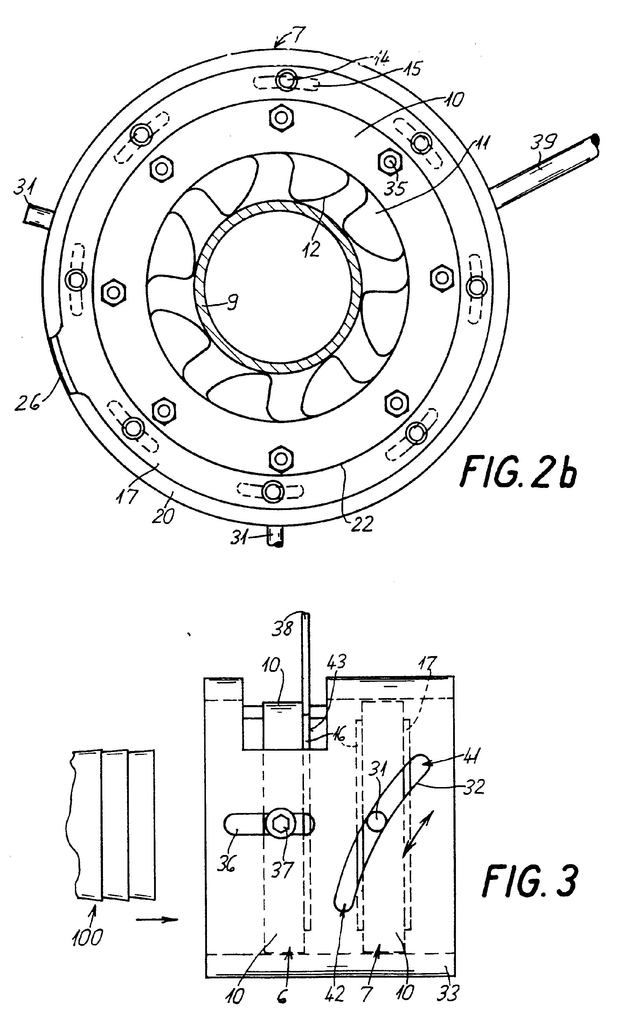

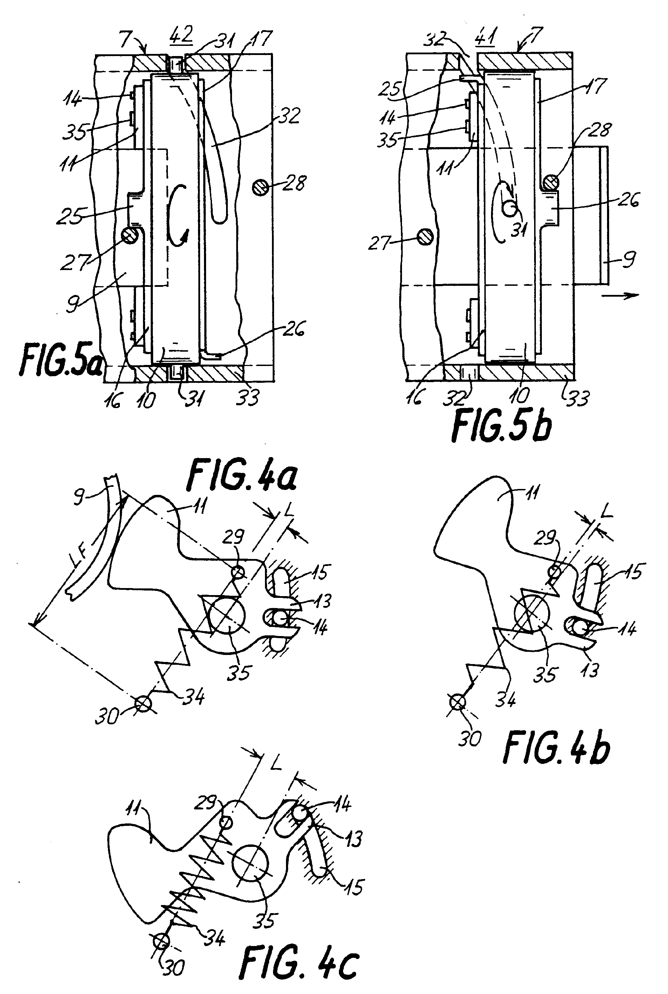

Der Greifring 7 weist auf seinem Umfang verteilt Führungsstifte 31 auf, welche, wie in Fig. 3 und Fig. 5a und 5b dargestellt, die Bewegungrichtung des Greifrings in radialer und axialer Richtung festlegen. Die Führungsstifte 31 werden in einem Führungszylinder 33 geführt, der gleichzeitig das Gehäuse der Vereinzelungsvorrichtung 2 bildet. Ein Betätigungshebel 39 ist mit einer hier nicht dargestellten und nicht beschriebenen Betätigungsvorrichtung verbunden, mittels derer der Greifring beim Vereinzelungsvorgang automatisch betätigt wird.

Fig. 3 zeigt schematisch die Anordnung der Greifringe 6 und 7 in dem Führungszylinder 33 der Vereinzelungsvorrichtung 2. Es ist eine Führungsnut 32 dargestellt, in der ein Führungsstift 31 des Greifrings 7 geführt wird. Befindet sich der Führungsstift 31 in der Position 41, so wurde die Lasche 26 des Steuerelements 17 durch einen Stift 28 als Anschlag zur Betätigung des Steuerelements verschoben und die Gesperre 11 geöffnet. Diese Situation ist in Fig. 5b dargestellt.

Wandert der Führungsstift 31 in der Führungsnut 32 in die Position 42, so wurde bereits die Lasche 25 des Steuerelements 16 durch den Stift 27 betätigt und die Gesperre 11 legen sich an die letzte Hülse 9, am Hülsenfuß der zu vereinzelnden Hülse 9 an. Diese Situation ist in Fig. 5a dargestellt. Ebenso wie der Führungsstift 31 wird auch der Betätigungshebel 39, was hier nicht dargestellt ist, in einer gleichgearteten Führungsnut geführt.

Der Greifring 6 ist mit seinem Tragkörper 10 nicht drehbar in dem Führungszylinder 33 gelagert. Der Greifring 6 ist nur in axialer Richtung auf den Abstand der Enden der ineinandergesteckten Hülsen einstellbar, was eine Einstellbarkeit auf unterschiedliche Konizitäten und Wandstärken bedeutet. Zur Verstellung kann eine Befestigungsschraube 37 gelöst und innerhalb eines Langlochs 36 verschoben werden. Da der Tragkörper 10 feststeht, ist nur ein Steuerelement 16 erforderlich. Es wird mittels der Betätigungsstange 38 betätigt. Diese bewegt sich innerhalb einer Ausnehmung 43. Der Betätigungshebel 38 kann mit einer hier nicht dargestellten Steuervorrichtung verbunden sein, die bei einem automatischen Hülsenvereinzelungsvorgang über die Betätigung der Betätigungshebel 38 und 39 die Funktion der Greifringe 6 und 7 steuert.

In den Fig. 4a bis 4c wird eines der acht Gesperre 11 in drei verschiedenen Positionen dargestellt und beschrieben, die für den Vereinzelungsvorgang erforderlich sind. Zwischen einem Federbolzen 29 des Gesperres 11 und einem Federbolzen 30, der an dem Tragkörper 10 befestigt ist, ist eine Zugfeder 34 gespannt.

Die Zugfeder bewirkt, daß das Gesperre 11 mit einer geringen Vorspannkraft an der Hülse, hier ist die Hülse 9 angedeutet, anliegt. Die Lage der beiden Federbolzen 29 und 30, bezogen auf den Drehpunkt 35 des Gesperres 11, ist so gewählt, daß folgende Vorgänge beim Vereinzelungsvorgang der Hülsen ablaufen:

Der erste Vorgang betrifft das Greifen einer Hülse und bezieht sich auf die Betätigung des Rings 7. Um den Greifvorgang auszulösen, besitzt das Steuerelement 16 eine Lasche 25, die, während der Greifring 7 in die Position 42 schwenkt, an einen am inneren Umfang des Führungszylinders 33 befestigten Stift 27 als Anschlag zur Betätigung des Steuerelements anstößt, wie es im Bild 5a dargestellt ist. Dadurch wird das Steuerelement 16 an einer weiteren Drehung gehindert. Da aber der Tragkörper 10 währendessen weiterschwenkt, entsteht eine Relativbewegung zwischen dem Steuerelement 16 und dem Tragkörper 10, die ausgenützt wird, um die Gesperre 11 nach innen zu schwenken. Durch die Verbindung zwischen dem vorderen Steuerelement 16 und dem hinteren Steuerelement 17 über die Stifte 14 wird auch das hintere Steuerelement 17 mitgedreht. Es entsteht eine erste Stellung, wie sie in Fig. 4a dargestellt ist. Das Gesperre 11 liegt nun in einer Lage, in dem der Hebelarm L, der Abstand zwischen Drehpunkt 35 und der Mittellinie der Feder 34, relativ lang ist. Das durch die Zugkraft der Feder 34 bewirkte Moment auf das Gesperre ist größer als die Reibungskräfte zwischen dem Gesperre 11 und dem Gesperrebolzen, mit dem im Drehpunkt 35 das Gesperre 11 an dem Tragkörper 10 befestigt ist, und zwischen den Steuerelementen 16 und 17 sowie dem Tragkörper 10. Diese Stellung ist also labil. Daher schwenkt das Gesperre über diese Stellung hinaus federunterstützt weiter nach innen. Dabei vergrößert sich auch der Hebelarm L, womit die durch die Verkürzung der Länge der Feder, LF, die geringer werdende Federkraft ausgeglichen wird.

Bei diesem Vorgang wird die zu vereinzelnde Hülse ergriffen und gleichzeitig zentriert. Die Gesperre 11 liegen am äußeren Umfang der Hülse, beispielsweise der Hülse 9, an, und bleiben so lange zugeschwenkt, bis sie durch eine weitere Drehung des Greifringes wieder aufgeschwenkt werden.

Der zweite Vorgang betrifft die Freigabe der Hülsen nach erfolgtem Vereinzelungsvorgang. Wird der Greifring 7 in seine Position 41 geschwenkt, das ist dann der Fall, wenn der Führungsstift 31 das andere Ende der Führungsnut 32 erreicht hat, stößt die Lasche 26 des hinteren Steuerelements 17, analog zum ersten Vorgang, an einem Stift 28 als Anschlag zur Betätigung des Steuerelements an, so daß eine gegensinnige Bewegung zwischen dem Steuerelement 17 und dem Tragkörper 10 erzeugt wird, wie es in Fig. 5b dargestellt ist. Diese Bewegung wird mit Hilfe der Stifte 14 zur vorderen Stirnfläche des Tragkörpers 10 übertragen und schwenkt die Gesperre 11 nach außen. Es entsteht eine zweite Stellung, wie sie in Fig. 4b dargestellt ist. Die Hülse ist jetzt freigegeben und kann entnommen werden, wie in Fig. 5b mit dem Pfeil angedeutet wird.

In dieser Lage ist der Hebelarm L, der Abstand zwischen der Mittellinie der Feder 34 und dem Drehpunkt 35, sehr kurz. Das durch die Zugkraft der Feder 34 bewirkte Moment auf das Gesperre 11 kann die Reibungswiderstände des Systems nicht überwinden. Das Gesperre muß folglich in dieser Stellung so lange verharren, bis es erneut zum Ergreifen einer weiteren Hülse in die Position 42 geschwenkt wird.

Befindet sich keine Hülse im Greifring, werden die Gesperre beim Greifvorgang bis zum Anschlag nach innen geschwenkt, wie es in einer dritten Stellung in Fig. 5c dargestellt ist. In dieser Lage liegt der Stift 14 am oberen Ende des Langloches 15 an und begrenzt damit den Schwenkbereich der Gesperre 11. Hier verbleiben die Gesperre ebenfalls so lange in dieser Stellung, bis der Greifring wieder in seine Öffnungsposition 41 geschwenkt wird.

Im folgenden wird ein Vereinzelungsvorgang näher erläutert. Zu Beginn eines Vereinzelungsvorganges sind die Gesperre 11 der beiden Greifringe 7 und 8 aufgeschwenkt, das heißt, der Greifring 7 zum Erfassen der letzten Hülse 9 einer Hülsensäule 100 befindet sich in der Position 41, die in Fig. 5b dargestellt ist, während beim zweiten Greifring 6 zum Halten der vorletzten Hülse 8 von außen über den Betätigungshebel 38 die Gesperre in aufgeschwenkter Lage gehalten werden. Die Hülsensäule 100 wird nun durch einen Vorschubmechanismus, wie er beispielsweise in Fig. 1 mit einem Förderband 111 als Hülsenzubringer dargestellt ist, so weit in den Führungszylinder 33 hineingeschoben, bis die letzte Hülse 9 mit ihrem Fußende an den Anschlag 5 anstößt. Nun wird über die hier nicht dargestellte und beschriebene Steuereinrichtung der Betätigungshebel 38 des Greifrings 6 betätigt, wodurch das Steuerelement 16 betätigt wird und die Gesperre 11 die vorletzte Hülse 8 ergreifen und zentrieren. Danach schwenkt der Hülsenanschlag 5 aus dem Führungszylinder 33 heraus, um den Abtransport der vereinzelten Hülse 9 zu ermöglichen. Gleichzeitig wird der Greifring 7 über den Betätigungshebel 39 in die Position 42 geschwenkt, wobei, wie in Fig. 5a gezeigt, die Lasche 25 des vorderen Steuerelementes 16 gegen den Stift 27 stößt und die Gesperre 11 in die Stellung schwenken, wie sie in Fig. 4a dargestellt ist. Der vordere Greifring 7 schließt die Gesperre 11 und ergreift damit die zu vereinzelnde letzte Hülse 9.

Alle Gesperre 11 liegen jetzt mit einer geringen Vorspannkraft an der letzten Hülse 9 beziehungsweise der vorletzten Hülse 8 an. In dem nun folgenden Vereinzelungsvorgang wird der Greifring 7 mittels des Betätigungshebels 39 aus seiner Position 42 in die Position 41 verschwenkt. Dieser Stellungswechsel ist in den Fig. 5a und 5b dargestellt. Durch die schraubenförmig verlaufende Führungsnut 32 wird der Greifring 7 zwangsläufig eine schraubenförmige Bewegung ausführen und sich dabei von dem feststehenden Greifring 6 entfernen.

Der Greifring 6 und der Greifring 7 sind so im Führungszylinder 33 angeordnet, daß sich ihre Gesperre 11 direkt gegenüberliegen. Zum einen können auf diese Weise auch Hülsen ergriffen werden, die eine sehr große Konizität oder Wanddicke aufweisen und deshalb sehr eng ineinandergesteckt sind. Desweiteren ist es dadurch möglich, Greifringe mit dem gleichen Aufbau zu verwenden. Die Sperrichtung des Greifrings 6 ist nämlich der Sperrichtung des Greifrings 7 entgegengesetzt, damit das Prinzip der Selbsthemmung selbsttätig auf die der zu vereinzelnden Hülse nachfolgenden Hülse übertragen wird. Dadurch wird die vorletzte Hülse, die Hülse 8, mit der gleichen Kraft gehalten und es wird das gleiche Drehmoment, mit entgegengesetztem Drehsinn, wie bei der zu vereinzelnden letzten Hülse 9 aufgebracht. Die überlagerte Dreh- und Axialbewegung des ersten Greifrings 7 hat die Aufgabe, durch eine schraubende Bewegung den eigentlichen Vereinzelungsvorgang, das Auseinanderziehen und Beabstanden der letzten und der vorletzten Hülse gegeneinander, zu bewirken.

Zusätzlich wird durch die Drehbewegung des Greifrings 7 die für den Lösevorgang benötigte Kraft, mit der die Hülse 9 und die Hülse 8 ergriffen werden müssen, selbsttätig geregelt. Sie ist bei den beiden Greifringen proportional zu der Kraft die aufgebracht werden muß, um die Haftreibungskraft zwischen den zu vereinzelnden Hülsen 8 und 9 zu überwinden.

Sind für das Lösen der Hülse 9 von der Hülse 8 große Kräfte notwendig, werden die beiden Hülsen entsprechend fest gegriffen, um die erforderliche Kraft übertragen zu können. Liegt die Hülse 9 aber nur lose in der Hülse 8, reicht die Vorspannkraft, die durch die Gesperre 11 der Greifringe 6 und 7 aufgebracht wird, um sie zu vereinzeln. Durch die Geometrie der Gesperre 11 wird die Greifkraft des ersten Ringes 7 und damit auch des zweiten Ringes 6 nur so lange erhöht, bis sich die Hülse 9 gegenüber der Hülse 8 verdrehen läßt. Sobald sich die Hülse 9 von der Hülse 8 gelöst hat und sich mit dem Greifring 7 mitdreht, sinkt die Greifkraft der beiden Greifringe 7 und 8 wieder auf die Vorspannkraft, wie sie beim Ergreifen der Hülsen am Anfang von den Gesperren 11 aufgebracht wird.

Der Greifring 7 schwenkt nun mit der vereinzelten Hülse 9 in die Position 41. Wie aus Fig. 5b ersichtlich, stößt dabei die Lasche 26 des hinteren Steuerelements 17 gegen den Stift 28, der im Inneren des Führungszylinders 33 angebracht ist und begrenzt damit die Bewegung des Steuerelementes 17. Da sich der Tragkörper 10 aber aufgrund der durch den Betätigungshebel 39 aufgebrachten Bewegung noch weiterbewegt, tritt eine Relativbewegung zwischen dem Tragkörper 10 und dem Steuerelement 17 auf. Über die Stifte 14 ist das hintere Steuerelement 17 mit dem vorderen Steuerelement 16 verbunden und das Steuerelement 16 wird dadurch ebenfalls an der Weiterdrehung gehindert. Da die Gesperre 11 mit dem Gesperrebolzen 35 an dem Tragkörper 10 befestigt sind und mit der Gabel 13 den Stift 14 umfassen, werden die Gesperre entgegen der Drehrichtung des Tragkörpers 10 verdreht und öffnen sich, so daß die Hülse 9 von dem Greifring 7 freigegeben wird. Die vereinzelte Hülse 9 läßt sich nun, wie in Fig. 1 dargestellt, durch eine Übergabevorrichtung 3 aus der Hülsensäule 100 herausziehen und auf eine Transportvorrichtung 4 übergeben.

Wenn von der Hülsensäule bis auf zwei Hülsen alle Hülsen vereinzelt worden sind und die letzte Hülse bis zum Hülsenanschlag 5 vorgeschoben wurde, bleibt der Greifring 6 geöffnet, das heißt, die Gesperre 11 schließen sich nicht, damit der Greifring 7 diese letzte Hülse greifen und an die Übergabevorrichtung 3 für den Abtransport übergeben kann.

## Patentansprüche

1. Vorrichtung zum Vereinzeln von zu Säulen ineinandergesteckten konischen Hülsen mit Greifvorrichtungen für die jeweils letzte und vorletzte Hülsen am Fuß der Säule, wobei die Greifvorrichtungen zum Lösen der Hülsen gegeneinander verdrehbar und zur Beabstandung der Hülsen voneinander axial zueinander verschieblich angeordnet sind, **dadurch gekennzeichnet,** daß mehrere über Reibschluß die Hülsen (8, 9) zwischen sich aufnehmende Greifer (11) jeweils für die letzte (9) und die vorletzte Hülse (8) vorhanden sind, die derart an je einem die jeweilige Hülse (8, 9) umfassenden Greifring (6, 7) beweglich angeordnet sind, daß bei einer Relativdrehung der die Hülsen (8, 9) umfassenden Greifringe (6, 7) um die Hülsenlängsachse die Greifer (11) mit einer bis zur Drehung der letzten Hülse (9) zunehmenden Anpreßkraft auf die Hülsen (8, 9) preßbar sind.

2. Vorrichtung nach Anspruch 1, dadurch gekennzeichnet, daß die Greifer (11) an den Greifringen (6, 7) als Klemmgesperre ausgebildet sind.

3. Vorrichtung nach einem der Ansprüche 1 oder 2, dadurch gekennzeichnet, daß Steuerelemente (16, 17) zum gemeinsamen Betätigen der Greifer (11) eines Greifringes (6, 7) vorgesehen sind, durch die die Greifer (11) zur Anlage an die jeweilige Hülse (8, 9) oder in eine Position zur Freigabe und zum Verschieben der Hülsen zu bringen sind.

4. Vorrichtung nach Anspruch 3, dadurch gekennzeichnet, daß die Steuerelemente (16, 17) drehbar auf dem Tragkörper (10) der Greifringe (6, 7) angeordnet sind.

5. Vorrichtung nach einem der Ansprüche 3 oder 4, dadurch gekennzeichnet, daß die Greifer (11) jeweils an dem Tragkörper (10) des Greifringes (6, 7) mittels der ihnen zugeordneten Steuerelemente (16, 17) schwenkbar zur Einnahme einer geöffneten, die Hülsen freigebenden, oder geschlossenen, die Hülsen ergreifenden Stellung angeordnet sind.

6. Vorrichtung nach einem der Ansprüche 3 bis 5, dadurch gekennzeichnet, daß im Drehweg der Steuerelemente (16, 17) Anschläge (27, 28) zur Begrenzung des Drehwegs und zur Betätigung der Steuerelemente (16, 17) vorgesehen sind und daß der Tragkörper (10) gegenüber den Steuerelementen (16, 17) über die Anschlagposition hinaus gegeneinander weiter verdrehbar angeordnet ist, so daß die mit den Greifern (11) in Wirkverbindung stehenden Steuerelemente (16, 17) die auf dem Tragkörper (10) gelagerten Greifer (11) betätigen.

7. Vorrichtung nach einem der Ansprüche 1 bis 6, dadurch gekennzeichnet, daß an den ringförmigen Tragkörpern (10) der Greifringe (6, 7) auf deren Umfang verteilt an Bolzen (35), die parallel zur Hülsenachse angeordnet sind, die Greifer (11) befestigt sind, daß diese Greifer (11) über Gabeln (13) mit den Stiften (14) der ringförmigen Steuerelemente (16, 17) in Verbindung stehen und daß diese Steuerelemente (16, 17) auf konzentrischen Führungsflächen (21, 22) an den Stirnflächen (19, 20) der Vorder- und Rückseite der ringförmigen Tragkörper (10) geführt sind.

8. Vorrichtung nach einem Ansprüche 1 bis 7, dadurch gekennzeichnet, daß der Greifring (6) der vorletzten Hülse (8) gegenüber dem Greifring (7) der letzten Hülse (9) zur Einstellung des Abstandes der Greifringe (6, 7) bei unterschiedlicher Konizität oder Wanddicke der Hülsen zueinander verschiebbar und feststellbar angeordnet ist.

9. Vorrichtung nach einem der Ansprüche 1 bis 8, dadurch gekennzeichnet, daß die Greifflächen (12) der Greifer (11) an die Konizität der Hülsen anpaßbar sind.

10. Vorrichtung nach einem der Ansprüche 1 bis 9, dadurch gekennzeichnet, daß die Greifer senkrecht zur Aufnahme von waagerechten Säulen von ineinandergesteckten konischen Hülsen (100) auf einer Hülsenzuführung (1) angeordnet sind.


## Claims

1. An apparatus for singling out conical bobbins which are fitted into one another to form columns, with gripper devices for whichever are the last and penultimate bobbins at the base of the column, the gripper devices for detaching the bobbins being rotatable in respect of one another and being disposed for axial displacement in respect of one another in order to space the bobbins apart, characterised in that a plurality of grippers (11) which via frictional engagement support the bobbins (8, 9) between them are provided for in each case the last (9) and the penultimate bobbins (8) which are so movably disposed on a gripper ring (6, 7) comprising the relevant bobbin (8, 9) that upon a relative rotation of the gripper rings (6, 7) surrounding the bobbins (8, 9) about the longitudinal axis of the bobbins, the grippers (11) can be pressed against the bobbins (8, 9) with a pressure which increases until rotation of the final bobbin (9).

2. An apparatus according to claim 1, characterised in that the grippers (11) on the gripper rings (6, 7) are constructed as a silent ratchet.

3. An apparatus according to one of Claims 1 or 2, characterised in that control elements (16, 17) are provided for common actuation of the grippers (11) of a gripper ring (6, 7), by which the grippers (11) can be brought to bear on the relevant bobbin (8, 9) or into a position to release and displace the bobbins.

4. An apparatus according to Claim 3, characterised in that the control elements (16, 17) are rotatably disposed on the supporting member (10) of the gripper rings (6, 7).

5. An apparatus according to one of claims 3 or 4, characterised in that the grippers (11) are disposed on the supporting member (10) of the gripper ring (6, 7) by means of their associated control elements (16, 17) so that they can pivot to assume an open position in which they release the bobbins or a closed position in which they grip the bobbins.

6. An apparatus according to one of claims 3 to 5, characterised in that in the path of rotation of the control elements (16, 17) there are abutments (27, 28) for limiting the rotary path and for actuating the control elements (16, 17) and in that the supporting member (10) is disposed to be rotatable in relation to the control elements (16, 17) and beyond the abutment position in respect of one another so that the control elements (16, 17) which are operatively connected to the grippers (11) which actuate grippers (11) mounted on the supporting member (10).

7. An apparatus according to one of Claims 1 to 6, characterised in that fixed on the annular supporting members (10) of the gripper rings (6, 7), distributed over their periphery, on bolts (35) which are disposed parallel with the bobbin axis, there are grippers (11) which are connected by forks (13) to the pins (14) of the annular control element (16, 17) and in that these control elements (16, 17) are guided on concentric guide surfaces (21, 22) on the end faces (19, 20) of the front and rear sides of the annular supporting members (10).

8. An apparatus according to one of Claims 1 to 7, characterised in that the gripper ring (6) of the penultimate bobbin (8) is disposed for displacement and can be locked in relation to the gripper ring (7) of the last bobbin (9) in order to adjust the distance between the gripper rings (6, 7) for varying conicity or wall thickness of the bobbins in respect of one another.

9. An apparatus according to one of Claims 1 to 8, characterised in that the gripper surfaces (12) of the grippers (11) can be adapted to the conicity of the bobbins.

10. An apparatus according to one of Claims 1 to 9, characterised in that the grippers are disposed on a bobbin guide (1) at right-angles to accommodate horizontal columns of inter-engaged conical bobbins (100).


## Revendications

1. Dispositif pour séparer les unes des autres des canettes coniques qui sont enfoncées les unes dans les autres pour former des piles, comprenant des dispositifs de préhension destinés aux canettes qui sont à chaque fois la dernière et l'avant-dernière à la base de la pile, les dispositifs de préhension étant disposés de façon à pouvoir tourner les uns par rapport aux autres pour détacher les canettes et à pouvoir coulisser axialement les uns par rapport aux autres pour écarter les canettes les unes des autres, caractérisé par le fait que sont présents à chaque fois, pour la dernière canette (9) et pour l'avant-dernière (8), plusieurs mors (11) qui reçoivent entre eux les canettes (8, 9) par entrainement par friction et qui sont montés mobiles à chaque fois sur une bague de préhension (6, 7) entourant la canette correspondante (8, 9) de manière telle que, lors d'une rotation relative des bagues de préhension (6, 7) qui entourent les canettes (8, 9) autour de l'axe longitudinal des canettes, les mors (11) puissent être serrés sur les canettes (8, 9) avec une force de serrage qui augmente

EP 0 358 030 B1

jusqu'à la rotation de la dernière canette (9).

2. Dispositif selon la revendication 1, caractérisé par le fait que les mors (11) montés sur les bagues de préhension (6, 7) sont réalisés sous la forme d'encliquetages par serrage.

3. Dispositif selon l'une des revendications 1 ou 2, caractérisé par le fait que sont prévus des éléments de commande (16, 17) qui sont destinés à l'actionnement commun des mors (11) d'une bague de préhension (6, 7), et au moyen desquels les mors (11) peuvent être amenés à porter sur la canette correspondante (8, 9) ou amenés dans une position destinée à la libération et au déplacement des canettes.

4. Dispositif selon la revendication 3, caractérisé par le fait que les éléments de commande (16, 17) sont montés tournants sur le corps porteur (10) des bagues de préhension (6, 7).

5. Dispositif selon l'une des revendications 3 ou 4, caractérisé par le fait que les mors (11) sont montés pivotants à chaque fois sur le corps porteur (10) de la bague de préhension (6, 7) au moyen des éléments de commande (16, 17) qui leur sont associés, en vue de prendre une position ouverte de libération des canettes ou une position fermée de saisie des canettes.

6. Dispositif selon l'une des revendications 3 à 5, caractérisé par le fait qu'il est prévu, sur le trajet en rotation des éléments de commande (16, 17), des butées (27, 28) qui sont destinées à délimiter le trajet en rotation et à actionner les éléments de commande (16, 17), et par le fait que le corps porteur (10) est monté en pouvant continuer à tourner par rapport aux éléments de commande (16, 17) au-delà de la position de butée, de sorte que les éléments de commande (16, 17) qui se trouvent en liaison fonctionnelle avec les mors (11) actionnent les mors (11) montés sur le corps porteur (10).

7. Dispositif selon l'une des revendications 1 à 6, caractérisé par le fait que les mors (1) sont fixés sur les corps porteurs annulaires (10) des bagues de préhension (6, 7), en étant répartis sur leur pourtour, sur des tourillons (35) qui sont disposés parallèlement à l'axe des canettes, par le fait que ces mors (11) sont en liaison par l'intermédiaire de fourches (13) avec les tiges (14) des éléments de commande annulaires (16, 17), et par le fait que ces éléments de commande (16, 17) sont guidés sur des surfaces de guidage concentriques (21, 22) ménagées sur les surfaces frontales (19, 20) des côtés avant et arrière des corps porteurs annulaires (10).

8. Dispositif selon l'une des revendications 1 à 7, caractérisé par le fait que la bague de préhension (6) de l'avant-dernière canette (8) est montée en pouvant être déplacée et bloquée par rapport à la bague de préhension (7) de la dernière canette (9), en vue du réglage de la distance des bagues de préhension (6, 7) dans le cas d'une conicité ou d'une épaisseur de paroi différente des canettes.

9. Dispositif selon l'une des revendications 1 à 9, caractérisé par le fait que les surfaces de préhension (12) des mors (11) peuvent être adaptées à la conicité des canettes.

10. Dispositif selon l'une des revendications 1 à 9, caractérisé par le fait que les mors sont disposés perpendiculairement à la réception de piles horizontales de canettes coniques (100) enfoncées les unes dans les autres sur un dispositif (1) d'amenée des canettes.

FIG. 1

EP 0 358 030 B1

FIG. 2a

FIG.2b

FIG.3

FIG.5a

FIG.5b

FIG.4a

FIG.4b

FIG.4C